# FASCICULE DE BREVET EUROPEEN

(11) **EP 2 692 164 B1**
(45) Date de publication et mention de la délivrance du brevet: **11.12.2019**
(21) Numéro de dépôt: 12717387.0
(22) Date de dépôt: 27.03.2012
(51) Int. Cl.: H04W 12/04, H04W 12/06, H04L 29/06

(54) **MISE EN PLACE D'UNE ASSOCIATION DE SÉCURITÉ DE TYPE GBA POUR UN TERMINAL DANS UN RÉSEAU DE TÉLÉCOMMUNICATIONS MOBILES**
POSITIONIERUNG EINER SICHERHEITSASSOZIATION VOM GBA-TYP FÜR EIN ENDGERÄT IN EINEM MOBILFUNKNETZ
PUTTING IN PLACE OF A SECURITY ASSOCIATION OF GBA TYPE FOR A TERMINAL IN A MOBILE TELECOMMUNICATIONS NETWORK

(30) Priorité: 31.03.2011 FR 1152707
(43) Date de publication de la demande: 05.02.2014
(73) Titulaire: Orange, 75015 Paris (FR)
(72) Inventeur: BOURNELLE, Julien, F-75012 Paris (FR); MORAND, Lionel, F-92240 Malakoff (FR)
(86) Numéro de dépôt international: PCT/FR2012/050631
(87) Numéro de publication internationale: WO 2012/168602

(56) Documents cités:
- EP-A1- 1 672 945
- WO-A1-2008/082337
- WO-A1-2009/102248

## Description

Le domaine de l'invention est celui des télécommunications, et plus particulièrement des télécommunications par réseaux mobiles.

Le 3GPP a défini une architecture appelée GBA (Generic Bootstrapping Architecture) dont le but est de permettre l'authentification d'un terminal mobile pour créer une association de sécurité entre le terminal mobile et une application.

Cette architecture comporte un serveur de fonction d'amorçage, dit BSF (Bootstrapping Function Server) et repose sur un protocole dit AKA de clés d'identification.

Au cours de la procédure d'authentification, le terminal, muni d'une carte SIM, utilise une connexion basée sur le protocole http pour s'authentifier auprès du serveur de fonction d'amorçage BSF. Le principe général est le suivant :
L'authentification a pour résultat une clé de sécurité valable pour une durée déterminée par le serveur. Le serveur fournit également au terminal un identifiant de session associé à la clé de sécurité ainsi que la durée de validité de la clé.

Lorsque le terminal ouvre ultérieurement une connexion IP avec une application, il indique à cette application qu'il souhaite être authentifié selon la technique GBA en lui fournissant l'identifiant de session.

L'application contacte le serveur BSF pour lui fournir l'identifiant de session. Le serveur BSF lui répond en lui fournissant une nouvelle clé dérivée à partir de la clé de sécurité et du nom de l'application. Le terminal effectue les mêmes opérations. Ainsi le terminal et l'application dispose d'une même clé qu'ils peuvent utiliser pour s'authentifier mutuellement et sécuriser la connexion IP entre eux.

A titre d'exemple, la demande internationale WO2008/082337 décrit un procédé utilisant une telle procédure basée sur une authentification préalable
auprès d'un serveur de fonction d'amorçage BSF, suivie d'une authentification selon la technique GBA lors de l'ouverture ultérieure d'une connexion IP.

Cette procédure implique cependant que le terminal ouvre son navigateur http pour pouvoir ensuite ouvrir une connexion IP avec l'application, cette connexion n'étant pas nécessairement basée sur le protocole http.

Par ailleurs, le terminal mobile s'est préalablement authentifié auprès d'un serveur d'accès réseau, lors de son attachement au réseau. Il y a donc double authentification du terminal mobile, une fois lors de son attachement au réseau puis une seconde fois pour créer une association de sécurité avec une application.

Le document EP 1 672 945 A1 (Samsung Electronics CO LTD [KR]) 21 Juin 2006 (2006-06-21) vise un système et une méthode permettant de mettre en œuvre une authentification rapide lors d'un transfert d'un équipement utilisateur dans un réseau d'interconnexion UMTS-WLAN.

La présente invention a pour but de résoudre les inconvénients de la technique antérieure en fournissant un procédé de mise en place d'une association de sécurité de type GBA pour un terminal, comportant les étapes suivantes, exécutées dans un serveur d'accès réseau, suite à la réception d'une demande d'attachement au réseau depuis le terminal :
- envoi d'une requête d'association de sécurité à un serveur de fonction d'amorçage,
- réception d'une réponse comportant des paramètres GBA d'association de sécurité, depuis le serveur de fonction d'amorçage,
- envoi au terminal d'un message d'acceptation d'attachement ATTACH ACCEPT modifié comportant les paramètres GBA d'association de sécurité permettant ultérieurement au terminal de créer une association de sécurité avec une application.

Grâce à l'invention, l'authentification du terminal pour l'association de sécurité de type GBA est couplée avec les opérations effectuées lors de l'attachement du terminal au réseau, au lieu d'être effectuée séparément et consécutivement à celles-ci, comme c'est le cas dans l'état de la technique.

Ainsi, la signalisation émise par le terminal est globalement réduite, et l'utilisation de l'association de sécurité de type GBA se trouve simplifiée.

Notamment, le terminal n'a pas besoin d'ouvrir une connexion http spécifique pour s'authentifier pour l'association de sécurité de type GBA.

Selon une caractéristique préférée, les paramètres d'association de sécurité comportent :
- une valeur aléatoire,
- un paramètre d'identification du réseau,
- un identifiant de session sécurisée,
- une durée de validité de la session sécurisée.

Ces paramètres permettront ultérieurement au terminal de créer une association de sécurité avec une application.

Selon une caractéristique préférée, la valeur aléatoire et le paramètre d'identification du réseau sont déterminés par un serveur d'abonnés.

Ainsi l'invention est compatible avec l'architecture GBA développée par le 3GPP.

Selon une caractéristique préférée, la requête d'association de sécurité envoyée à un serveur de fonction d'amorçage est une requête de type « Diameter » comportant l'identité d'abonné mobile internationale de l'utilisateur du terminal.

Selon une caractéristique préférée, la réponse comportant des paramètres d'association de sécurité, reçue depuis le serveur de fonction d'amorçage, est de type « Diameter ».

Le protocole « Diameter » est l'un des protocoles AAA couramment utilisé.

Selon une caractéristique préférée, le message comportant les paramètres d'association de sécurité envoyé au terminal est un message de type « ATTACH ACCEPT » modifié pour comporter les paramètres d'association de sécurité.

L'invention concerne aussi un serveur d'accès réseau adapté pour mettre en place d'une association de sécurité de type GBA pour un terminal, comportant des moyens de réception d'une demande d'attachement au réseau depuis le terminal, et comportant en outre :
- des moyens d'envoi d'une requête d'association de sécurité à un serveur de fonction d'amorçage, suite à la réception d'une demande d'attachement au réseau depuis le terminal,
- des moyens de réception d'une réponse comportant des paramètres GBA d'authentification et des paramètres d'association de sécurité, depuis le serveur de fonction d'amorçage,
- des moyens d'envoi au terminal d'un message d'acceptation d'attachement ATTACH ACCEPT comportant les paramètres GBA d'association de sécurité permettant ultérieurement au terminal de créer une association de sécurité avec une application.

Ce dispositif présente des avantages analogues à ceux du procédé précédemment présenté.

Dans un mode particulier de réalisation, les différentes étapes du procédé selon l'invention sont déterminées par des instructions de programmes d'ordinateurs.

En conséquence, l'invention vise aussi un programme d'ordinateur sur un support d'informations, ce programme étant susceptible d'être mis en œuvre dans un ordinateur, ce programme comportant des instructions adaptées à la mise en œuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions des programmes d'ordinateur tels que mentionnés ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

D'autres caractéristiques et avantages apparaîtront à la lecture de modes de réalisation préférés décrits en référence aux figures dans lesquelles :
- la figure 1 représente de façon schématique les équipements d'un réseau de télécommunication mobile impliqués dans la présente invention, et
- la figure 2 représente les étapes d'un procédé de mise en place d'une association de sécurité de type GBA pour un terminal, selon l'invention.

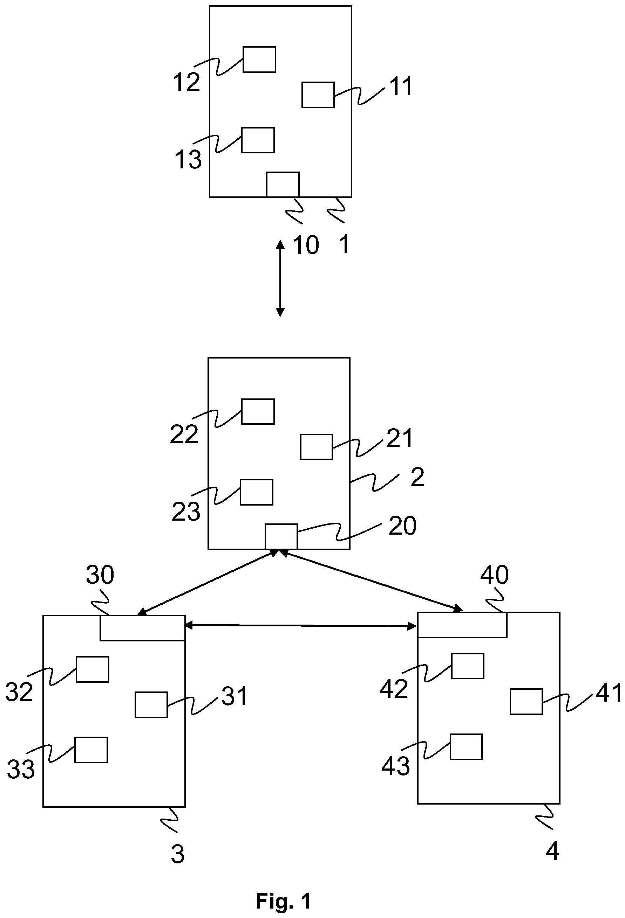

Selon un mode de réalisation de l'invention représenté à la **figure 1**, les équipements mettant en œuvre l'invention sont un terminal mobile 1, un serveur 2 d'accès réseau, un serveur 3 de fonction d'amorçage, dit BSF, et un serveur 4 d'abonnés, dit HSS (Home Subscriber Server).

L'invention est mise en œuvre pour un accès de type GPRS (General Packet Radio Service). Dans ce cas, le serveur d'accès réseau 2 est un Noeud de support GPRS de service, dit SGSN (Serving GPRS Support Node).

Dans un autre mode de réalisation, l'invention est mise en œuvre dans un réseau de type LTE/EPC (Long Term Evolution/Evolved Packet Core). Dans ce cas, le serveur d'accès réseau 2 est un serveur dit MME (Mobility Management Entity).

Le terminal mobile 1 peut être, par exemple, un terminal de téléphonie mobile, un ordinateur portable, un assistant personnel numérique, ou autre. Dans l'exemple représenté le terminal mobile 1 est un terminal de téléphonie mobile appartenant à un utilisateur.

Comme représenté sur la figure 1, le terminal mobile 1 comporte un module d'émission-réception 10 configuré pour émettre et recevoir des données notamment vers et depuis le serveur d'accès réseau 2. Il comporte également un processeur 11, une mémoire vive 12 et une mémoire morte 13.

Le serveur d'accès réseau 2 a la structure conventionnelle d'un ordinateur. Il comporte un processeur 21, une mémoire vive 22 et une mémoire morte 23. Il comporte un module d'émission-réception 20 configuré pour communiquer avec le terminal mobile 1, le serveur 3 de fonction d'amorçage BSF et le serveur 4 d'abonné HSS.

Le serveur d'accès réseau est adapté pour mettre en place d'une association de sécurité de type GBA pour un terminal. Il comporte des moyens de réception d'une demande d'attachement au réseau depuis le terminal.

Selon l'invention, il comporte en outre :
- des moyens d'envoi d'une requête d'association de sécurité à un serveur de fonction d'amorçage, suite à la réception d'une demande d'attachement au réseau depuis le terminal,
- des moyens de réception d'une réponse comportant des paramètres d'authentification et des paramètres d'association de sécurité, depuis le serveur de fonction d'amorçage,
- des moyens d'envoi d'un message comportant les paramètres d'association de sécurité au terminal.

Le serveur 3 de fonction d'amorçage BSF a la structure conventionnelle d'un ordinateur. Il comporte un processeur 31, une mémoire vive 32 et une mémoire morte 33. Il comporte un module d'émission-réception 30 configuré pour communiquer avec le serveur d'accès réseau 2 et le serveur 4 d'abonné HSS.

Le serveur 4 d'abonné HSS a la structure conventionnelle d'un ordinateur. Il comporte un processeur 41, une mémoire vive 42 et une mémoire morte 43. Il comporte un module d'émission-réception 40 configuré pour communiquer avec le serveur d'accès réseau 2 et le serveur 3 de fonction d'amorçage BSF.

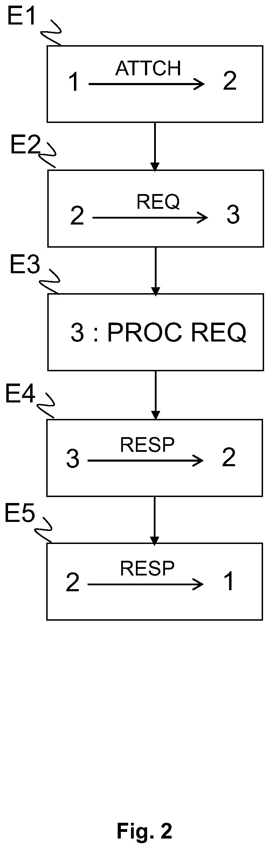

Selon un mode de réalisation de l'invention représenté à la **figure 2**, le procédé de mise en place d'une association de sécurité de type GBA pour le terminal mobile 1 comporte des étapes E1 à E5.

Les échanges entre le serveur d'accès réseau 2 et le serveur BSF 4 sont par exemple basés sur le protocole Diameter.

A l'étape E1, le terminal mobile 1 demande son attachement au serveur d'accès réseau 2 qui traite cette demande. Les échanges spécifiques à l'attachement au réseau sont classiques et ne seront pas détaillés ici.

Le serveur d'accès réseau 2 traite la demande d'attachement du terminal mobile 1 et effectue une authentification du terminal, procédure durant laquelle il interroge le serveur HSS 4 pour récupérer les paramètres d'authentification AKA.

Le serveur HSS 4 est la base centralisée hébergeant les données du profil utilisateur associé au terminal mobile 1. Si ce profil supporte l'association de sécurité de type GBA, alors le serveur HSS 4 stocke également une indication de cette caractéristique.

Le serveur HSS 4 répond au serveur d'accès réseau 2. On suppose que le terminal mobile 1 supporte l'association de sécurité de type GBA. Le serveur HSS 4 insère donc cette information dans sa réponse au serveur d'accès réseau 2.

Par exemple, si le protocole Diameter est utilisé pour les échanges entre les deux serveurs, l'indication que le terminal mobile 1 supporte l'association de sécurité de type GBA est ajoutée à la commande « Authentification-Information-Answer » envoyée par le serveur HSS 4 au serveur d'accès réseau 2 en réponse à la demande d'authentification. Selon ce protocole, un paquet comporte un ensemble de paires dites AVP (Attribute-Value Pairs). Une paire AVP spécifique « GBA-Support » est ajoutée de la manière suivante :

```
          < Authentication-Information-Answer> ::= < Diameter Header: 318, PXY,
   16777251 >
                                      < Session-Id >
                                      [ Vendor-Specific-Application-Id ]
                                      [ Result-Code ]
                                      [ Experimental-Result ]
                                      { Auth-Session-State }
                                      { Origin-Host }
                                      { Origin-Realm }
                                      * [Supported-Features]
                                      [ Authentication-Info ]
                                      *[ AVP ]
                                      *[ Failed-AVP ]
                                      *[ Proxy-Info ]
                                      *[ Route-Record ]
                                       [ GBA-Support ]
```

Le serveur d'accès réseau 2 reçoit la réponse du serveur HSS 4. A l'étape suivante E2, le serveur d'accès réseau 2 interroge le serveur BSF 3 pour demander la création d'une association de sécurité GBA. Pour cela, le serveur d'accès réseau 2 génère une requête Diameter dans laquelle il fournit l'identifiant unique, ou identité d'abonné mobile internationale IMSI (International Mobile Subscriber Identity) de l'utilisateur du terminal mobile 1. Cette requête est envoyée au serveur BSF 3.

Une réalisation possible de la requête Diameter initiée par le serveur d'accès réseau 2 est la suivante :

```
   < GBA-Info-Request> ::=<Diameter Header: xxx, REQ, PXY, yyyyy >
                   < Session-Id >
                    { Vendor-Specific-Application-Id }
                    { Origin-Host }                 ; Address of Access server
                    { Origin-Realm }                ; Realm of Access server
                    { Destination-Realm }           ; Realm of BSF
                    [ Destination-Host ]            ; Address of the BSF
                    { User-Name }                   ; IMSI
                    [ GBA_U-Awareness-Indicator ]   ; GBA_U awareness
                   *[ AVP ]
                   *[ Proxy-Info ]
                   *[ Route-Record ]
```

A l'étape suivante E3, le serveur BSF 3 reçoit et traite la requête du serveur d'accès réseau 2. Il vérifie que l'identifiant unique IMSI de l'utilisateur du terminal mobile 1 existe et a droit au service GBA. Si c'est le cas, le serveur BSF 3 interroge le serveur d'abonnés HSS 4 pour récupérer les paramètres d'authentification AKA. Le serveur d'abonnés HSS 4 envoie les paramètres d'authentification AKA au serveur BSF 3. Les paramètres d'authentification sont sous la forme d'un vecteur d'authentification, comportant une valeur aléatoire RAND générée par le serveur HSS 4, un jeton d'authentification du réseau AUTN permettant d'authentifier le réseau, une clé de chiffrement CK et une clé d'intégrité Ik.

Après avoir reçu les paramètres d'authentification AKA, le serveur BSF 3 forme une clé Ks en concaténant les clés Ik et Ck, génère un identifiant de session B-TID et détermine la durée de validité de la session GBA associé à la clé Ks.

A l'étape suivante E4, le serveur BSF 3 génère et envoie la réponse au serveur d'accès réseau 2 et lui fournit les informations suivantes : la valeur aléatoire RAND générée par le HSS, le jeton AUTN permettant d'authentifier le réseau, calculé par le HSS, l'identifiant de session B-TID et la durée de validité de la clé Ks.

Une réalisation possible de la réponse Diameter fournie par le serveur BSF 3 au serveur d'accès réseau 2 est la suivante :

```
   < GBA-Info-Answer> ::= < Diameter Header: xxx, PXY, yyyyy >
                   < Session-Id >
                    { Vendor-Specific-Application-Id }
                    [ Result-Code ]
                    [ Experimental-Result]
                    { Origin-Host } ; Address of BSF
                    { Origin-Realm } ; Realm of BSF
                    [ User-Name ] ; IMPI
                    { Transaction-Identifier } ; B-TID
                    [ RAND ] ; RAND
                    [ AUTN ] ; AUTN
                    [ Key-ExpiryTime ] ; Time of expiry
                   *[ AVP ]
                   *[ Proxy-Info ]
                   *[ Route-Record ]
```

A l'étape suivante E5, le serveur d'accès réseau 2 reçoit et traite la réponse du serveur BSF 3, récupère les informations GBA et les transmet au terminal mobile 1.

Pour cela, dans les modes de réalisation GPRS et LTE/EPC, le serveur d'accès réseau 2 envoie au terminal mobile 1 un message ATTACH ACCEPT qui est modifié pour comporter quatre éléments d'information optionnels qui seront interprétés par le terminal mobile 1 s'il supporte l'authentification GBA. Sinon, ces éléments d'information seront ignorés par le terminal mobile 1.

Les éléments d'information supplémentaires sont :
- la valeur aléatoire RAND,
- le jeton d'authentification AUTN,
- l'identifiant de session B-TID et
- la durée de validité de la clé Ks.

Ainsi le terminal mobile 1 dispose des données d'authentification GBA, qu'il pourra utiliser ultérieurement, de manière classique, lorsqu'il se connectera à une application.

## Revendications

1. Procédé de mise en place d'une association de sécurité de type GBA pour un terminal (1),
**caractérisé en ce qu'**il comporte les étapes suivantes, exécutées dans un serveur d'accès réseau (2), suite à la réception d'une demande d'attachement au réseau depuis le terminal :
- envoi (E2) d'une requête d'association de sécurité à un serveur de fonction d'amorçage (3),
- réception (E5) d'une réponse comportant des paramètres GBA d'association de sécurité, depuis le serveur de fonction d'amorçage (3),
- envoi (E5) au terminal d'un message d'acceptation d'attachement ATTACH ACCEPT modifié comportant les paramètres GBA d'association de sécurité, permettant ultérieurement au terminal de créer une association de sécurité avec une application

2. Procédé selon la revendication 1, **caractérisé en ce que** les paramètres d'association de sécurité comportent :
- une valeur aléatoire fournie,
- un paramètre d'identification du réseau (AUTN),
- un identifiant de session sécurisée,
- une durée de validité de la session sécurisée.

3. Procédé selon la revendication 2, **caractérisé en ce que** la valeur aléatoire et le paramètre d'identification du réseau sont déterminés par un serveur d'abonnés.

4. Procédé selon l'une quelconque des revendications 1 à 3, **caractérisé en ce que** la requête d'association de sécurité envoyée (E2) à un serveur de fonction d'amorçage (3) est une requête de type « Diameter » comportant l'identité d'abonné mobile internationale de l'utilisateur du terminal.

5. Procédé selon l'une quelconque des revendications 1 à 4, **caractérisé en ce que** la réponse comportant des paramètres d'association de sécurité, reçue (E5) depuis le serveur de fonction d'amorçage (3), est de type « Diameter ».

6. Procédé selon l'une quelconque des revendications 1 à 5, **caractérisé en ce que** le message comportant les paramètres d'association de sécurité envoyé (E5) au terminal est un message de type « ATTACH ACCEPT » modifié pour comporter les paramètres d'association de sécurité.

7. Serveur d'accès réseau adapté pour mettre en place d'une association de sécurité de type GBA pour un terminal, comportant des moyens de réception d'une demande d'attachement au réseau depuis le terminal,
**caractérisé en ce qu'**il comporte :
- des moyens d'envoi d'une requête d'association de sécurité à un serveur de fonction d'amorçage (BSF), suite à la réception d'une demande d'attachement au réseau depuis le terminal,
- des moyens de réception d'une réponse comportant des paramètres d'authentification et des paramètres GBA d'association de sécurité, depuis le serveur de fonction d'amorçage (BSF),
- des moyens d'envoi au terminal d'un message d'acceptation d'attachement ATTACH ACCEPT comportant les paramètres GBA d'association de sécurité permettant ultérieurement au terminal de créer une association de sécurité avec une application.

8. Programme d'ordinateur comportant des instructions pour l'exécution des étapes du procédé selon l'une quelconque des revendications 1 à 6 lorsque ledit programme est exécuté par un ordinateur.

9. Support d'enregistrement lisible par un ordinateur sur lequel est enregistré un programme d'ordinateur comprenant des instructions pour l'exécution des étapes du procédé selon l'une quelconque des revendications 1 à 6.

## Patentansprüche

1. Verfahren zum Einrichten einer Sicherheitsbeziehung vom Typ GBA für ein Endgerät (1),
**dadurch gekennzeichnet, dass** es die folgenden Schritte beinhaltet, die in einem Netzwerkzugangsserver (2) nach dem Empfangen, von dem Endgerät, einer Anforderung einer Verbindung zu dem Netzwerk ausgeführt werden:
- Senden (E2) einer Sicherheitsbeziehungsanfrage an einen Bootstrapping-Funktion-Server (3),
- Empfangen (E5) einer Antwort, die GBA-Sicherheitsbeziehungsparameter beinhaltet, von dem Bootstrapping-Funktion-Server (3),
- Senden (E5), an das Endgerät, einer modifizierten Nachricht über die Annahme der Verbindung, ATTACH ACCEPT, die die GBA-Sicherheitsbeziehungsparameter beinhaltet, die es dem Endgerät anschließend ermöglichen, eine Sicherheitsbeziehung zu einer Anwendung herzustellen.

2. Verfahren nach Anspruch 1, **dadurch gekennzeichnet, dass** die Sicherheitsbeziehungsparameter Folgendes beinhalten:
- einen gelieferten Zufallswert,
- einen Netzwerkidentifikationsparameter (AUTN),
- ein Kennzeichen einer sicheren Sitzung,
- eine Gültigkeitsdauer der sicheren Sitzung.

3. Verfahren nach Anspruch 2, **dadurch gekennzeichnet, dass** der Zufallswert und der Netzwerkidentifikationsparameter von einem Teilnehmerserver bestimmt werden.

4. Verfahren nach einem der Ansprüche 1 bis 3, **dadurch gekennzeichnet, dass** die an einen Bootstrapping-Funktion-Server (3) gesendete (E2) Sicherheitsbeziehungsanfrage eine Anfrage vom Typ "Diameter" ist, die die internationale mobile Teilnehmerkennung des Benutzers des Endgeräts beinhaltet.

5. Verfahren nach einem der Ansprüche 1 bis 4, **dadurch gekennzeichnet, dass** die Antwort, die Sicherheitsbeziehungsparameter beinhaltet und von dem Bootstrapping-Funktion-Server (3) empfangen (E5) wird, vom Typ "Diameter" ist.

6. Verfahren nach einem der Ansprüche 1 bis 5, **dadurch gekennzeichnet, dass** die Nachricht, die die Sicherheitsbeziehungsparameter beinhaltet und an das Endgerät gesendet (E5) wird, eine modifizierte Nachricht vom Typ "ATTACH ACCEPT" ist, um die Sicherheitsbeziehungsparameter zu beinhalten.

7. Netzwerkzugangsserver, der dazu ausgelegt ist, eine Sicherheitsbeziehung vom Typ GBA für ein Endgerät einzurichten, der ein Mittel zum Empfangen, von dem Endgerät, einer Anforderung einer Verbindung zu dem Netzwerk beinhaltet,
**dadurch gekennzeichnet, dass** er Folgendes beinhaltet:
- Mittel zum Senden einer Sicherheitsbeziehungsanfrage an einen Bootstrapping-Funktion-Server (BSF) nach dem Empfangen, von dem Endgerät, einer Anforderung einer Verbindung zu dem Netzwerk,
- Mittel zum Empfangen, von dem Bootstrapping-Funktion-Server (BSF), einer Antwort, die Authentifizierungsparameter und GBA-Sicherheitsbeziehungsparameter beinhaltet,
- Mittel zum Senden, an das Endgerät, einer Nachricht über die Annahme der Verbindung, ATTACH ACCEPT, die die GBA-Sicherheitsbeziehungsparameter beinhaltet, die es dem Endgerät anschließend ermöglichen, eine Sicherheitsbeziehung zu einer Anwendung herzustellen.

8. Computerprogramm, das Anweisungen zum Ausführen der Schritte des Verfahrens nach einem der Ansprüche 1 bis 6 beinhaltet, wenn das Programm von einem Computer ausgeführt wird.

9. Computerlesbares Aufzeichnungsmedium, auf dem ein Computerprogramm aufgezeichnet ist, das Anweisungen zum Ausführen der Schritte des Verfahrens nach einem der Ansprüche 1 bis 6 beinhaltet.

## Claims

1. Method of putting in place a security association of GBA type for a terminal (1),
**characterized in that** it comprises the following steps, executed in a network access server (2), subsequent to the receipt of a request for attachment to the network from the terminal:
- dispatch (E2) of a security association request to a bootstrapping function server (3),
- receipt (E5) of a response comprising security association GBA parameters, from the bootstrapping function server (3),
- dispatch (E5), to the terminal, of a modified attachment acceptance message, ATTACH ACCEPT, comprising the security association GBA parameters, subsequently allowing the terminal to create a security association with an application.

2. Method according to Claim 1, **characterized in that** the security association parameters comprise:
- a supplied random value,
- a parameter for identifying the network (AUTN),
- a secure session identifier,
- a duration of validity of the secure session.

3. Method according to Claim 2, **characterized in that** the random value and the parameter for identifying the network are determined by a subscriber server.

4. Method according to any one of Claims 1 to 3, **characterized in that** the security association request dispatched (E2) to a bootstrapping function server (3) is a request of "Diameter" type comprising the international mobile subscriber identity of the user of the terminal.

5. Method according to any one of Claims 1 to 4, **characterized in that** the response comprising security association parameters, which is received (E5) from the bootstrapping function server (3), is of "Diameter" type.

6. Method according to any one of Claims 1 to 5, **characterized in that** the message comprising the security association parameters which is dispatched (E5) to the terminal is a message of "ATTACH ACCEPT" type modified so as to comprise the security association parameters.

7. Network access server adapted for putting in place a security association of GBA type for a terminal, comprising means for receiving a request for attachment to the network from the terminal,
**characterized in that** it comprises:
- means for dispatching a security association request to a bootstrapping function server (BSF), subsequent to the receipt of a request for attachment to the network from the terminal,
- means for receiving a response comprising authentication parameters and security association GBA parameters, from the bootstrapping function server (BSF),
- means for dispatching, to the terminal, an attachment acceptance message, ATTACH ACCEPT, comprising the security association GBA parameters, subsequently allowing the terminal to create a security association with an application.

8. Computer program comprising instructions for the execution of the steps of the method according to any one of Claims 1 to 6 when said program is executed by a computer.

9. Recording medium readable by a computer on which is recorded a computer program comprising instructions for the execution of the steps of the method according to any one of Claims 1 to 6.
